# EUROPEAN PATENT SPECIFICATION

(11) **EP 4 547 963 B1**
(45) Date of publication and mention of the grant of the patent: **22.07.2026**
(21) Application number: 23742200.1
(22) Date of filing: 28.06.2023
(51) Int. Cl.: F03D 13/25, F03D 13/40

(54) **ASSEMBLY, TRANSPORTATION AND INSTALLATION OF FLOATING WIND TURBINES**
ANORDNUNG, TRANSPORT UND INSTALLATION VON SCHWIMMENDEN WINDTURBINEN
ENSEMBLE, TRANSPORT ET INSTALLATION D'ÉOLIENNES FLOTTANTES

(30) Priority: 28.06.2022 GB 202209471
(43) Date of publication of application: 07.05.2025
(73) Proprietor: Subsea 7 Norway AS, 4033 Stavanger (NO)
(72) Inventor: HØYVIK, Eskil, 4015 Stavanger (NO)
(74) Representative: Keltie LLP
(86) International application number: PCT/EP2023/067744
(87) International publication number: WO 2024/003197

(56) References cited:
- WO-A1-2020/165892
- WO-A1-2021/022250
- WO-A2-2010/021655

## Description

This invention relates to floating wind turbines used for offshore generation of electrical power. The invention relates particularly to the challenges of assembling large wind turbines with spar foundations, transporting them to offshore installation sites and installing them at those sites.

On average, offshore wind turbines experience higher and steadier wind speeds than onshore wind turbines while reducing visual impact and avoiding noise constraints, thus allowing higher rotor speeds. Offshore wind turbines can not only be more efficient but also larger than onshore turbines, hence producing substantially more electricity, and are free of the constraint of available land.

Many of the benefits of offshore wind turbines increase with the distance from shore but so do the challenges of installing and operating them. For example, increasing water depth requires more complex foundation solutions than are possible in shallow water. Eventually, floating solutions are required, in which the upper structure of a wind turbine - namely, a mast or tower surmounted by a nacelle that supports a rotor comprising a set of blades - surmounts a buoyant support such as a raft, platform, buoy or float that is moored to the seabed.

Various buoyant support arrangements have been proposed and used for floating offshore wind turbines, or FOWTs, including semi-submersible buoys and tension leg platforms. Another buoyant support arrangement employs a spar-type foundation inspired by spar platform solutions that are used widely in the subsea oil and gas industry for deep-water applications.

A spar foundation comprises a vertical elongate cylindrical buoy with a deep draft, ballasted at its lower end to position the centre of mass or gravity of the entire floating wind turbine assembly beneath the centre of buoyancy. This distribution of buoyancy and weight, coupled with a small waterline area and low volume close to the surface, makes the structure stable against pitch, roll and heave motions under the influence of wind, waves and currents.

Like a semi-submersible wind turbine support, a spar buoy is kept in position by catenary or taut spread mooring lines that extend to anchors on the seabed. For example, the world's first commercial floating wind farm 'Hywind', situated in the North Sea off Scotland, uses catenary moored spar foundations.

It is challenging to handle the weight and bulk of spar buoys, especially when towing and upending them, and their deep draft means that they are not suited to shallow water. The deep draft is a particular problem when assembling a wind turbine with a spar buoy at or close to shore and when transporting the resulting wind turbine assembly away from the shore. The absence of shelter and exposure to high seas means that assembly operations offshore in deeper water become increasing impractical with distance from the shore.

A known assembly technique, used for installing the Hywind wind farm, involves assembling the upper structure of a wind turbine at a yard beside the shore. Then, a heavy-lift floating crane lifts the entire upper structure and travels to a spar buoy moored upright in deep water close to the shore, before uniting the upper structure with the buoy.

More generally, as taught by EP 3722196 or KR 102192116, a buoyant support such as a spar buoy can be towed or carried horizontally either alone or with the mast of a wind turbine attached to it. The buoy is then upended in deep water, moored, and the upper structure of a wind turbine, or at least the nacelle and the rotor, can be lifted or otherwise positioned on top.

There are very few locations in the world where deep water is conveniently close to shore and especially where sufficiently deep water is sufficiently sheltered to perform assembly operations on massive, tall structures at great heights. The Norwegian fjords are some of the rare examples of such locations. There is also a need for such locations to be conveniently close to eventual installation sites so that it is practical to tow a floating wind turbine assembly to where it will eventually operate.

Another approach is to assemble the upper structure of a wind turbine with its supporting buoy on shore in a horizontal or near-horizontal orientation and then to tow the resulting floating wind turbine assembly in that orientation before upending and mooring it at an installation site. This enables assembly and initial transportation to be performed at a shallow-water location and therefore allows construction to be performed in a wider range of coastal sites. It may also allow the assembly to fit under a bridge situated in the path between the assembly site and the installation site.

Unlike other types of buoys, it is not practical simply to tow a floating wind turbine assembly including a spar buoy horizontally through water because of its low stability in that orientation and its self-uprighting characteristic. Also, it is desirable to tow the complete assembly, including the blades of the rotor, so that there is no need to perform additional assembly operations offshore. The blades and the hub and nacelle to which they are attached should be held above the surface to protect them from immersion in salt water.

A floating wind turbine assembly including a spar buoy could be carried in a horizontal or near-horizontal orientation by a barge or on the deck of a transport vessel as disclosed in WO 2011/051804 and JP 2013029101. The transport vessel proposed in WO 2011/051804 is partially submersible to be upended from a horizontal orientation to a vertical orientation together with the wind turbine assembly. If ever built, such a vessel would therefore need highly complex and expensive buoyancy control systems, the ability to operate in both horizontal and vertical orientations and a hull that is resistant to hydrostatic pressure at considerable depth. JP 2013029101 also proposes a partially submersible transport vessel among other similarly complex and expensive solutions for overboarding a floating wind turbine assembly.

Even without those complications, the vessels proposed in both WO 2011/051804 and JP 2013029101 would be large and costly. Their hulls are long enough to support at least the full length of the spar buoy and have enough displacement to hold the entire length of the wind turbine assembly, including the spar buoy, clear of the water. In contrast, WO 2020/165892, EP 2318701 and EP 2761176 propose towing a floating wind turbine assembly through water partially immersed in a near-horizontal orientation, inclined upwardly from a buoy at a lower end to the nacelle and rotor at an upper end. By virtue of that shallow inclination, the buoy is partially immersed to contribute buoyancy and yet the mast, the nacelle and the rotor are held clear of the water during towing.

In WO 2020/165892, a floating wind turbine assembly is supported in a towing configuration by the buoyancy of a partially-immersed spar buoy at the lower end supplemented by the buoyancy of a floating cradle that temporarily supports the mast at the upper end. The cradle thereby holds the mast, the nacelle and the rotor clear of the water during towing. At the installation site, upending of the floating wind turbine assembly is controlled by tugs that act on the spar buoy and on the cradle while balancing changes in buoyancy of the assembly after releasing the cradle from the mast and ballasting the spar buoy.

The cradle of WO 2020/165892 is connected to the spar buoy by ropes or chains during towing and upending. The mast is therefore subject to transverse forces and hence bending loads due to differential wave action upon the spar buoy and the cradle during transportation.

In EP 2318701 and EP 2761176, a floating wind turbine assembly is supported in a towing configuration entirely by the buoyancy of one or more partially-immersed buoys at the lower end. In EP 2318701, a supplementary buoy at the surface acts on the lower end of the spar buoy via an extensible link that lengthens as the spar buoy is ballasted and the assembly is upended. In EP 2761176, the mast pivots relative to a semi-submersible buoy during upending. In each case, the mast is cantilevered from the buoy to hold the nacelle and the rotor clear of the water during towing. This also subjects the mast to transverse forces and therefore bending loads due to wave action on the buoy during transportation.

To assemble a floating wind turbine with a spar buoy in a horizontal or shallowly inclined orientation, it is convenient to perform assembly operations on the shore, on a slope or on a slipway. This approach is known in the art for building vessels or for fabricating pipelines. For example, US 4778306 teaches how successive sections of a pipeline may be connected together and then sunk into the sea, including ballasting the successive sections of the pipeline.

WO 2021/022250 relates to a floating offshore wind turbine structure that combines a submerged spar buoy with outrigger legs and a mast on which a wind turbine nacelle is mounted.

WO 2014/187977 describes a deep-draft floating foundation for a wind turbine. The floating foundation includes a central buoyant element and a bottom ballast section.

CN 108626078 relates to a spar-type floating foundation that may be arranged on a barge for transport to an installation site. The barge includes a stern ballast tank that may be filled with seawater to sink one end of the barge during installation of the foundation.

WO 2010/021655 describes an offshore floating wind turbine apparatus that includes a tilting mechanism for tilting the wind turbine into a substantially horizontal orientation and bringing it back into an upright position, and a rotating mechanism operable to control azimuth orientation of the wind turbine.

Against this background, the invention resides in a method of supporting a spar-type floating offshore wind turbine assembly in a transport configuration. The method comprises: applying buoyant upthrust to the assembly by partial immersion of a spar buoy at a lower end of the assembly and at least partial immersion of at least one discrete support buoy that is attached to the spar buoy at a position offset longitudinally from the lower end; and bracing an upper structure of the assembly with a brace that acts between the spar buoy and the upper structure. The upper structure comprises a mast of the wind turbine that is cantilevered from an upper end of the spar buoy. A longitudinal axis of the assembly is preferably inclined at an acute angle to the horizontal when in the transport configuration.

The aggregate upthrust acting on the assembly or the spar buoy and the at least one support buoy can substantially equate to the entire weight of the assembly so that no additional buoyant support is required. The assembly may have a centre of gravity and/or a centre of buoyancy disposed at longitudinal positions between the or each support buoy and the lower end of the assembly. Conveniently, the spar buoy may be cradled by the support buoy or between two or more of the support buoys.

One or more members of the brace may be placed under tension, the or each of those members being anchored to the spar buoy and/or to the upper structure. For example, suspension force may be applied to the upper structure through the brace from above the upper structure. Conversely, supporting force may instead, or additionally, be applied to the upper structure through the brace from beneath the upper structure. Conveniently, the brace may be supported on the or each support buoy.

On installation, or otherwise when in deep enough water, the assembly may be upended from the transport configuration by ballasting the spar buoy and rotating the assembly about the or each support buoy as the longitudinal axis approaches an upright orientation.

The upper structure is preferably separated from the brace before or during rotation of the assembly. Similarly, the brace may be separated from the or each support buoy before rotation of the assembly. The or each support buoy can rotate with the assembly or the assembly can rotate relative to the or each support buoy.

The inventive concept embraces a corresponding method of assembling a spar-type floating offshore wind turbine assembly. That method comprises: attaching a discrete support buoy to a spar buoy at a position offset longitudinally from a lower end of the spar buoy; joining an upper structure of the assembly to the spar buoy along a common longitudinal axis, the upper structure comprising a mast that is cantilevered from an end of the spar buoy; and bracing the upper structure of the assembly with a brace that acts between the spar buoy and the upper structure. Again, the longitudinal axis may be inclined at an acute angle to the horizontal.

The support buoy or buoys may be positioned beneath and/or to opposed sides of the spar buoy, and the brace may be attached to the or each support buoy.

Preliminarily, the spar buoy can be assembled from two or more sections that are moved onto, and united on, a launch axis that is aligned with the longitudinal axis of the assembly. One or more sections of the spar buoy can be moved along the launch axis as another section is moved onto the launch axis. Each section of the spar buoy can be moved onto the launch axis from a direction transverse to the launch axis.

The assembly method may further comprise launching the assembly into water to be supported by buoyant upthrust arising from partial immersion of the spar buoy and at least partial immersion of the at least one support buoy. Conveniently, the at least one support buoy can support the assembly in the manner of a skid during launch movement of the assembly.

The inventive concept also extends to the configuration of the assembly when floating on water in the transport configuration. In that case, the assembly comprises: a partially immersed spar buoy at a lower end of the assembly; an upper structure comprising a mast that is cantilevered from an upper end of the spar buoy; at least one discrete support buoy that is attached to the spar buoy at a position offset longitudinally from the lower end, the or each support buoy being at least partially immersed; and a brace that acts between the spar buoy and the upper structure.

Again, a longitudinal axis of the assembly is preferably inclined at an acute angle to the horizontal, and aggregate upthrust acting on the spar buoy and the at least one support buoy may substantially equate to the entire weight of the assembly. The brace need not be positively buoyant and so could be negatively or neutrally buoyant or not immersed to any significant extent.

Where the brace is supported by the or each support buoy, the brace may be cantilevered from the support buoy. For example, such a brace can support the upper structure and particularly the mast from beneath.

Where the brace suspends the upper structure from above, the brace may comprise at least one upright that supports at least one tensile member extending longitudinally and downwardly from the upright to the spar buoy and/or to the upper structure. For example, one or more tensile members may extend downwardly in opposite longitudinal directions from the upright to the spar buoy and the upper structure.

The or each support buoy may be offset transversely to beneath the longitudinal axis, for example aligned with the water surface or at a longitudinal position where the assembly or the spar buoy intersects the water surface. The or each support buoy may be at a longitudinal position that is wholly within the length of the spar buoy.

The or each support buoy can extend to, or be positioned at, laterally offset locations on opposed sides of the spar buoy. Those laterally offset locations may be spaced apart by a distance greater than a length of the or each support buoy in a direction parallel to the longitudinal axis.

Unlike the large, expensive and complex transport vessels proposed in the prior art, the support buoy of the invention is notably compact, inexpensive and simple. The support buoy can be essentially passive to support upending and requires no buoyancy control systems to initiate and control upending. Also, the support buoy remains at a shallow depth and so need not handle large hydrostatic pressures. Yet, despite its compactness, the support buoy may provide for the upper structure of a floating offshore wind turbine assembly to be supported and protected effectively against damage and fatigue.

Embodiments of the invention implement a method to tow a spar-type floating offshore wind turbine, the method comprising: installing a support buoy below a wind turbine assembly that is substantially horizontal or slightly tilted from the horizontal, wherein the centre of gravity and/or the centre of buoyancy of the wind turbine in its towing or transport configuration are above or at levels above the support buoy; and bracing the upper structure of the wind turbine to the support buoy to keep it above water during transportation.

Embodiments of the invention also implement a method to assemble and install a spar-type floating offshore wind turbine, the method comprising: assembling sections of a floater or float; approaching a support buoy at a level below or at a level below the location of the centre of gravity and/or a centre of buoyancy of the assembled wind turbine in a towing or transport configuration; assembling an upper structure of the wind turbine with the float; bracing the upper structure to the support buoy; and towing the wind turbine into water.

The sections of the float may be assembled on a slope at or close to the shoreline, for example parallel to and extending down the slope. The longitudinal axis of the wind turbine mast may, for example, be at an angle of less than 30° to the horizontal when in the transport configuration.

The support buoy may be used as a skid to displace the wind turbine from the shore into the sea to start towing. The support buoy may also be used as a pivot point for upending the wind turbine in the sea.

The upper structure of the wind turbine may be braced to the support buoy by one or more brace elements in the form of temporary cables, rods or a lattice or other rigid outrigger structure. The upper structure of the wind turbine may also, or alternatively, be braced to the support buoy by a brace structure comprising at least one mast or column extending upwardly from the support buoy and at least one pair of elongate support elements that extend from the column in mutually-opposed directions.

The pair of support elements may comprise at least one support element extending between the top of the column and an anchor point on the upper structure of the wind turbine, and at least one support element extending between the top of the column and an anchor point on the float of the wind turbine.

Two or more columns, masts or uprights may straddle the wind turbine between them and may converge or be bridged to join at their top. A pair of support elements, which may be different elements or conjoined portions of one elongate element, may extend from each respective uprights or from the conjoined uprights. Connection points for the support elements on the or each upright may be aligned, merged or in common between the support elements.

Each support element or brace element may be a strut acting in compression or a tensile element such as a suspension element acting in tension, and may be rigid or flexible, or a stay, a cable, a rod or a tendon.

In summary of the invention, a spar-type floating offshore wind turbine assembly is assembled and then supported in a transport configuration with its longitudinal axis substantially horizontal or inclined at a shallow acute angle to the horizontal. The assembly is upended during installation to bring the longitudinal axis to a substantially vertical orientation.

In the transport configuration, buoyant upthrust is applied to the assembly by immersion of a spar buoy at a lower end of the assembly and of at least one discrete support buoy that is attached to the spar buoy at a position offset longitudinally from the lower end.

A brace acts between the spar buoy and an upper structure of the assembly, that structure comprising a mast that is cantilevered from an upper end of the spar buoy. The brace may be attached to the or each support buoy.

In order that the invention may be more readily understood, reference will now be made, by way of example, to the accompanying drawings in which:
Figure 1 is a schematic side view of a wind turbine assembly floating on water in a transport configuration of the invention;
Figure 2 is a cross section on line II-II of Figure 1;
Figure 3 is a cross section on line III-III of Figure 1;
Figures 4a to 4j are a sequence of schematic side views showing construction, launching, transportation and installation of a wind turbine assembly in accordance with the invention;
Figure 5 is a schematic side view showing a variant of the installation step shown in Figure 4i;
Figure 6 is a schematic side view showing a second embodiment of the invention;
Figure 7 is a cross section on line VII-VII of Figure 6;
Figure 8 is a schematic side view showing a variant of the second embodiment shown in Figures 6 and 7; and
Figures 9 and 10 are cross-sectional views corresponding to Figure 2 but showing other possible support buoy arrangements.

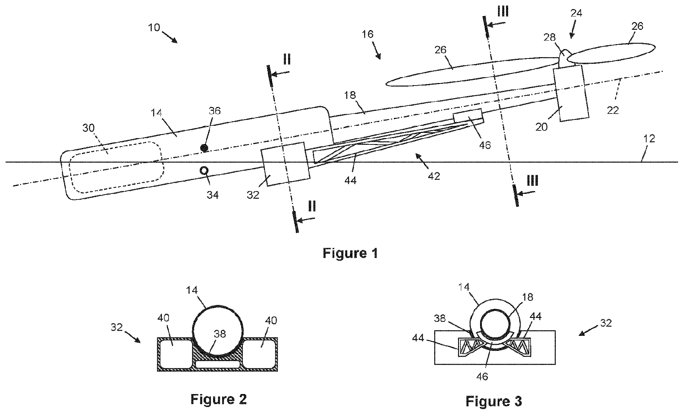

Referring firstly to Figure 1 of the drawings, a floating offshore wind turbine assembly 10 is shown here floating on the surface 12 of a body of water in a transport configuration in accordance with the invention.

The wind turbine assembly 10 comprises a spar buoy 14 surmounted by a conventional upper turbine structure 16 that comprises a mast 18 extending upwardly to a nacelle 20. The spar buoy 14 and the mast 18 are in substantially coaxial alignment in series along a common longitudinal axis 22. In the transport configuration, the assembly 10 is in a near-horizontal orientation in which the longitudinal axis 22 is inclined at a shallow angle of less than about thirty degrees to the horizontal, for example ten degrees as shown. Thus, the mast 18 extends from the top of the spar buoy 14 in the manner of a cantilever arm.

The nacelle 20 supports a rotor 24 comprising a set of blades 26 extending radially from a hub 28. Typically, the rotor 24 comprises three blades 26; in the transport configuration, one of the blades 26 is held substantially parallel to the longitudinal axis 22 so that the other two blades 26 balance each other about that axis 22.

Toward the lower end of the assembly 10, the spar buoy 14 is partially immersed in the water but at this stage is deballasted to contribute buoyant upthrust, with its internal buoyancy tank 30 substantially filled with air. Toward the upper end of the assembly 10, the upper structure 16 is held clear of the surface 12.

In accordance with the invention, the assembly 10 also receives buoyant upthrust from a discrete support buoy 32. The support buoy 32 is situated beneath the assembly 10 at an intermediate longitudinal position between the upper and lower ends of the assembly 10. In this example, the support buoy 32 is located beneath the spar buoy 14 near an upper end of the spar buoy 14, close to the interface between the spar buoy 14 and the mast 18.

Conveniently, the support buoy 32 is positioned at or close to the surface 12 of the water when the assembly 10 is in the transport configuration. In this example, the support buoy 32 is at the surface 12, hence partially immersed, and is at a longitudinal position aligned with where the inclined assembly 10 intersects the generally horizontal level of the surface 12.

The centre of buoyancy 34 and the centre of gravity 36 of the system comprising the assembly 10 and the support buoy 32 are at respective locations between the support buoy 32 and the immersed part of the spar buoy 14. In the meta-stable system of the transport configuration, the centre of gravity 36 is, nominally, directly above the centre of buoyancy 34 and both are in a vertical plane containing the longitudinal axis 22. Of course, there will be some relative lateral movement between the centre of buoyancy 34 and the centre of gravity 36 during pitching or rolling motions of the assembly 10. However, these transient offsets between the centre of buoyancy 34 and the centre of gravity 36 will produce self-righting moments when the assembly 10 is in the transport configuration.

As will be apparent from the cross-sectional views of Figures 2 and 3, the support buoy 32 lies beneath, and extends laterally beyond, the spar buoy 14, hence retaining and supporting the spar buoy 14 in the manner of a cradle. For this purpose, the top of the support buoy 32 is traversed by a longitudinal groove 38 whose upwardly concave curvature complements the convex external curvature of the spar buoy 14.

In this example, the buoyancy of the support buoy 32 is offset transversely to beneath the longitudinal axis 22 at the longitudinal location of the support buoy 32. Indeed, in this example, the buoyancy of the support buoy 32 is entirely beneath the longitudinal axis 22.

Figure 2 shows that the support buoy 32 contains at least one hollow air-filled chamber 40 positioned or extending to each side of the assembly 10. The support buoy 32 is compact longitudinally but relatively large laterally, being substantially wider than it is long. This spreads substantial buoyancy laterally outboard of the spar buoy 14 on opposite sides of the longitudinal axis 22, to the benefit of stability of the assembly 10 against rolling motion. Conversely, the relative shortness of the support buoy 32 in the longitudinal direction makes the support buoy 32 easy to turn or pitch about a transverse horizontal axis. This makes it simple to control the inclination of the assembly 10 via the buoyancy tank 30 during transportation and to initiate and control upending of the assembly 10 when the buoyancy tank 30 is flooded during installation.

In addition to providing a seat for the spar buoy 14, the groove 34 maximises the depth and therefore the volume and buoyancy of the lateral portions of the support buoy 32. This is achieved without correspondingly elevating the centre of gravity 36 of the assembly 10, which is also to the benefit of stability and simplifies attachment of the support buoy 32 to the assembly 10 during construction. In this respect, the support buoy 32 may be positioned relative to the assembly 10 as a unit or could be assembled around the assembly 10 before launching and transportation.

Figures 1 and 3 show a brace structure 42 that extends longitudinally from the support buoy 32 as an outrigger to support the upper structure 16 of the assembly 10 against transverse bending loads. The brace structure 42 may be tuned to give minimal resistance to pitching motions and thus a more constant support against bending moments.

In this example, the brace structure 42 is a strut arrangement that comprises a pair of rigid arms 44, each of which may take the form of a lattice frame as shown. The arms 44 converge from respective sides of the support buoy 32 around the top of the spar buoy 14 to hold a cradle 46 between them that receives and supports the mast 18. Thus, the cradle 46 has upwardly concave curvature that complements the convex external curvature of the mast 18.

The cradle 46 supports the mast 18 at an intermediate location along the length of the mast 18, in this example about halfway along the mast 18. More generally, the cradle 46 could be positioned at between one quarter and three quarters of the length of the mast 18 away from the spar buoy 14. There could also be more than one cradle 46, the cradles 46 then being spaced longitudinally at different respective locations along the mast 18.

Whilst a minor portion of the brace structure 42 could be submerged below the surface 12, the brace structure 42 contributes no buoyancy, or at most negligible buoyancy, to the system. Indeed, the brace structure 42 itself can be negatively buoyant. For example, members of the brace structure 42 could be flooded even if they are hollow.

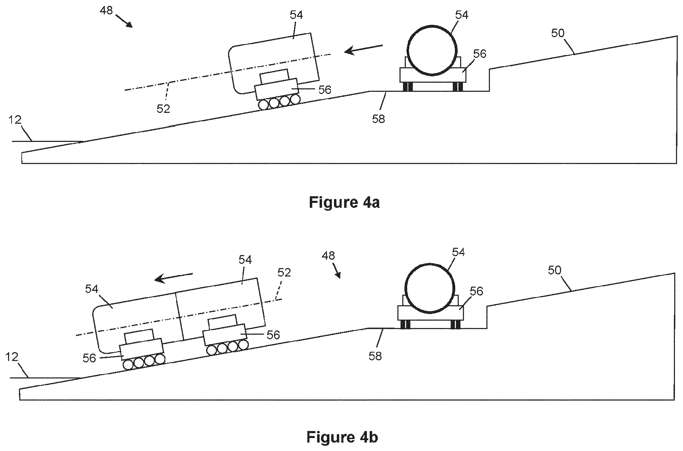

Turning now to Figures 4a to 4j, these drawings exemplify steps of construction, launching, transportation and installation of a floating offshore wind turbine assembly 10 in accordance with the invention. With initial reference to Figures 4a to 4f, construction of the assembly 10 is performed in a yard 48 onshore at a coastal location with ready access to the sea.

In this case, the yard 48 comprises an inclined slipway 50 that slopes down into the water and so extends beneath the surface 12. Conveniently, the inclination of the slipway 50 approximately corresponds to the desired inclination of the assembly 10 in the transport configuration shown in Figure 1, but this is not essential. However, it is preferred to launch the assembly 10 with the spar buoy 14 leading the upper structure 16 into the water. Thus, the spar buoy 14 will be at a lower end of the assembly 10 extending down the incline of the slipway 50, with the longitudinal axis 22 of the assembly 10 coincident with a launch axis 52 that is generally orthogonal to the edge of the water at the end of the slipway 50. The direction of the launch axis 52 may, for example, be defined by rails extending down the slipway 50.

The bulk and weight of the spar buoy 14 makes it convenient to assemble the spar buoy 14 from a series of prefabricated sections 54. Those sections 54 can be manoeuvred onto the launch axis 52 carried by respective trolleys 56, which may be self-propelled or towed to a desired position on the slipway 50. For this purpose, the slipway 50 comprises a substantially horizontal roadway 58 that extends across the slope of the slipway 50, parallel to the edge of the surface 12. Sections 54 of the spar buoy 14 can thereby be introduced to the launch axis 52 on respective trolleys 56. turned off the roadway 58 and then moved down the slipway 50 in alignment with the launch axis 52.

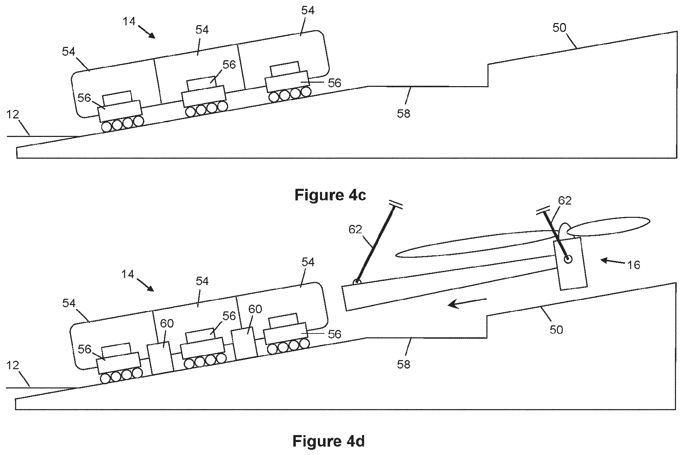

In Figure 4a, a first section 54 of the spar buoy 14 and its trolley 56 are already on the launch axis 52 on the slipway 50. The second section 54 and its trolley 56 are moving along the roadway 58 toward the launch axis 52. Figure 4b then shows the second section 54 joined to the first section 54 on the slipway 50 and the third section 54 and its trolley 56 moving along the roadway 58 toward the launch axis 52. It will be noted that the first section 54 has moved down the slipway 50 to accommodate the second section 54. Figure 4c then shows the third section 54 united with the first two sections 54 on the slipway 50 to complete the spar buoy 14.

Up to this stage, the three sections 54 remain supported on the slipway 50 by their respective trolleys 56. The trolleys 56 may, however, be supplemented or replaced by fixed temporary supports 60 as shown in Figure 4d, which also shows the complete upper section 16 of the assembly 10 being lifted as a unit via lifting cables 62 to be joined to the top of the spar buoy 14. Parts of the upper structure 16, such as the nacelle 20 or sections of the mast 18, could be lifted separately. In principle, parts of the upper structure 16 could also be introduced onto the slipway 50 and manoeuvred on trolleys 56 via the roadway 58.

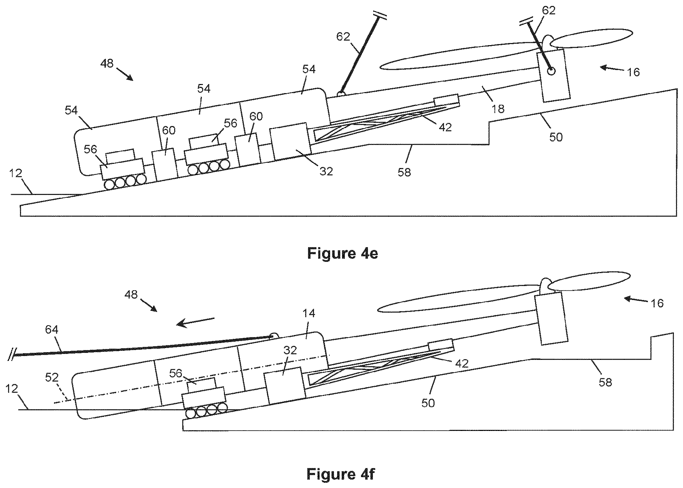

Figure 4e shows the support buoy 32 and the brace structure 42 positioned beneath and fixed temporarily to the spar buoy 14 and the mast 18 while the upper structure 16 remains supported by the lifting cables 62. Figure 4f then shows the lifting cables 62 removed and the assembly 10, with the support buoy 32 and the brace structure 42, being launched down the slipway 50 into the water. The assembly 10 is shown here being pulled into the water by one or more lines 64 attached to the spar buoy 14.

Conveniently, the support buoy 32 can serve as a skid to support movement of the assembly 10 along the launch axis 52. The assembly 10 can also remain supported by at least some of the trolleys 56 and/or temporary supports 60 during that movement. The trolleys 56 and/or the temporary supports 60 can move down the slipway 50 with the assembly 10 or the assembly 10 can slide relative to the trolleys 56 and/or the temporary supports 60. The trolleys 56 and/or the temporary supports 60 are removed in turn as the weight of the assembly 10 is progressively transferred to the water.

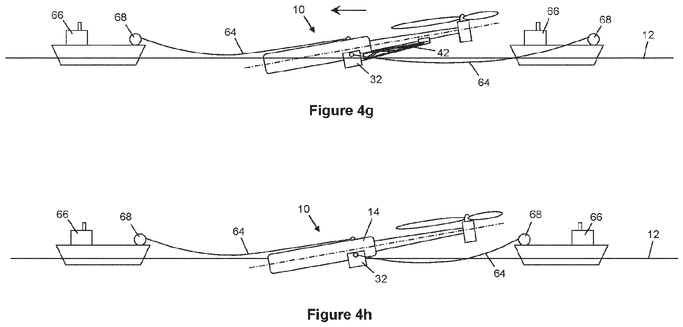

With the launch operation now complete, Figure 4g shows the assembly 10, with the support buoy 32 and the brace structure 42 attached, now inclined in the transport configuration as shown in Figure 1. Lines 64 couple the assembly 10 to tugs 66 that are shown here towing the assembly 10 between them across the surface 12 toward an installation site.

Once at the installation site as shown in Figure 4h, the brace structure 42 can be removed from the support buoy 32 in preparation for upending the assembly 10. The tugs 66 then act in opposition about the assembly 10 to control upending using their winches 68, with the line 64 of one tug 66 being connected to the spar buoy 14 and the line 64 of the other tug 66 being connected to the support buoy 32.

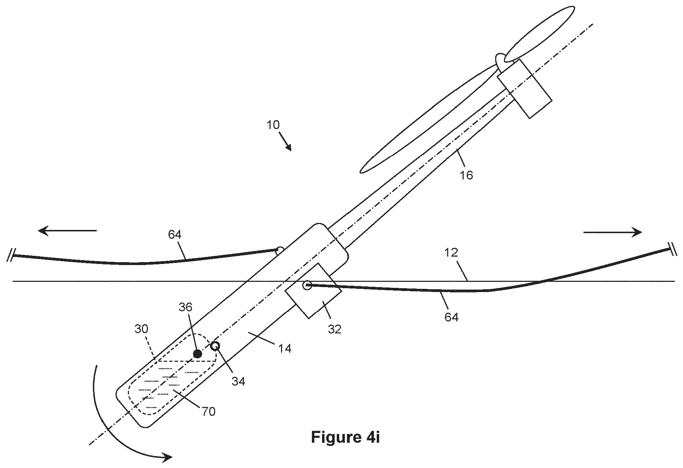

Figure 4i shows the assembly 10 during upending, with its internal buoyancy tank 30 now partially flooded with ballast water 70. This causes the centre of gravity 36 to migrate toward the lower end of the spar buoy 14 and so causes the assembly 10 to pivot about the support buoy 32. The support buoy 32 is held in a desired position by tension in the line 64 that couples the support buoy 32 to the associated tug 66. Nevertheless, it will be noted that the support buoy 32 remains attached to the assembly 10 and so tilts with the assembly 10 during upending.

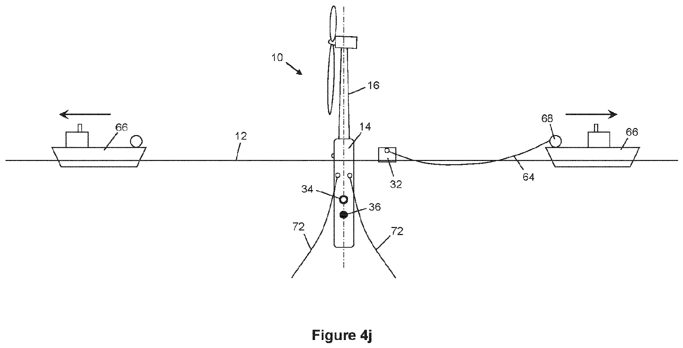

Figure 4j then shows the assembly 10 fully upended and coupled to catenary moorings 72 that extend from the spar buoy 14 toward respective anchors in the seabed beneath. It will be noted that the centre of gravity 36 is now beneath the centre of buoyancy 34 in a fully stable configuration. The support buoy 32 can now be detached from the assembly 10 and towed away by the associated tug 66, as shown, for re-use to install another floating wind turbine offshore. The other tug 66 has also detached from the spar buoy 14 and is shown sailing away to perform other operations.

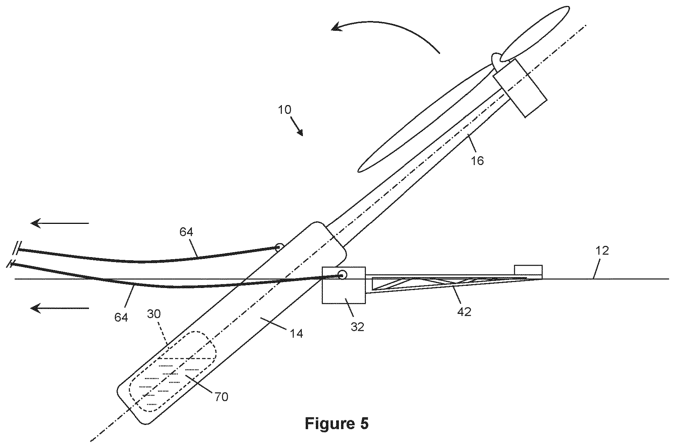

As noted above with reference to Figures 4h and Figure 4i, the brace structure 42 may be removed from the support buoy 32 before upending and the support buoy 32 can remain attached to the assembly 10 to tilt with the assembly 10 during upending. However, as illustrated in Figure 5, this is not essential. Here, the brace structure 42 remains attached to the support buoy 32 but the support buoy 32 is detached from the assembly 10. In that case, the orientation of the support buoy 32 and the brace structure 42 need not change during upending of the assembly 10. However, the support buoy 32 can be held by one or more additional lines 64 to serve as a fulcrum about which the assembly 10 pivots during upending.

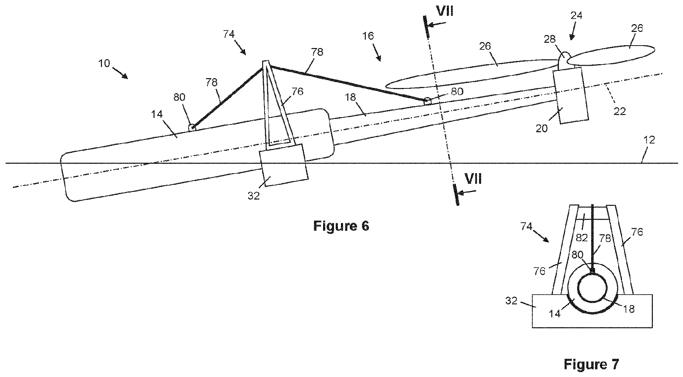

Figures 6 to 8 show variants of the brace structure 42 of Figures 1 and 3. Specifically, Figures 6 and 7 show a variant in which a brace structure 74 comprises one or more uprights 76 beside the assembly 10 extending upwardly from the support buoy 32 to a level above the assembly 10. The upright 76 supports the upper ends of cables 78 that diverge downwardly from the upright 76 to respective anchor points 80 on an upper side of the spar buoy 14 and the mast 18. The cables 78 may be separate cables 78 that are attached to the upright 76 individually or opposed end portions of one cable 78 that extends through or over the upright 76.

As best appreciated in the cross-sectional view of Figure 7, there is a pair of uprights 76 in this example, one to each side of the assembly 10 and therefore straddling the assembly 10 between them. The uprights 76 may converge upwardly as shown and could join each other at their upper ends but here they are joined by a transverse cross-member or bridge structure 82 to which the cables 78 are attached or over which one cable 78 extends as shown. Thus, the arrangement of the cables 78 shown in Figures 6 and 7 is akin to that of a cable-stayed bridge.

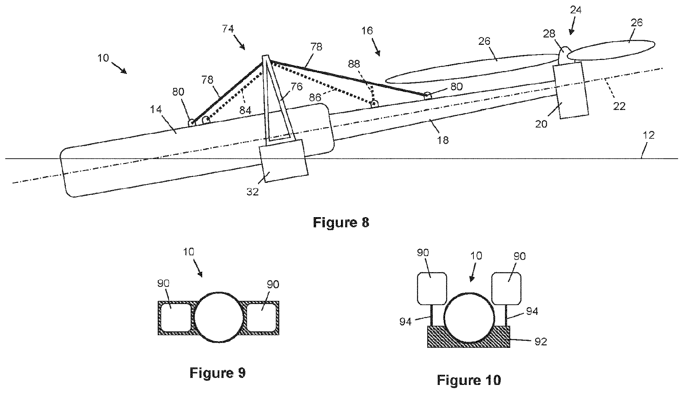

The dotted lines in Figure 8 show that multiple cables 78 could extend from the or each upright 76 to respective anchor points 80 that are spaced longitudinally along the assembly 10 on the spar buoy 14 and/or the mast 18. Additional cables are shown here in a parallel arrangement 84 and a downwardly divergent arrangement 86, and another cable 88 suspended vertically from a main inclined cable 78 in an arrangement akin to a suspension bridge.

Referring finally to Figures 9 and 10, these drawings show that a support buoy 32 could also comprise buoyant elements 90 that may or may not be conjoined or linked to each other, other than via the assembly 10. For example, there could be separate buoyant elements 90 to each side of the assembly 10 mounted on or linked to the assembly 10 individually or directly as shown in Figure 9. Alternatively, the buoyant elements 90 could be buoyancy modules attached to respective spigots or other mountings on or attached to the assembly 10, for example the ends of a cross-member 92 extending beneath or cradling the assembly 10 as shown in Figure 10. Such buoyancy elements 90 may be mounted on or linked to the assembly 10 rigidly as shown in Figure 9 or via pliant links 94 such as wires as shown in Figure 10. At least one of such buoyancy elements 90 may be located on each respective side of the assembly 10.

Many other variations are possible within the inventive concept. For example, the support buoy could comprise buoyancy aligned laterally with the longitudinal axis, hence being positioned above or below the floating wind turbine assembly.

Whilst use of a slipway is preferred, another inclined surface such as a beach, or indeed a substantially horizontal surface, could be used for constructing and launching a floating wind turbine assembly instead.

A support buoy could remain attached to a floating wind turbine assembly after installation, for example for use in relocating or decommissioning the assembly.

## Claims

1. A method of supporting a spar-type floating offshore wind turbine assembly (10) in a transport configuration, the method comprising:
applying buoyant upthrust to the assembly (10) by partial immersion of a spar buoy (14) at a lower end of the assembly (10) and at least partial immersion of at least one discrete support buoy (32, 90) that is attached to the spar buoy (14) at a position offset longitudinally from the lower end; and
bracing an upper structure (16) of the assembly (10) with a brace (42, 74) that acts between the spar buoy (14) and the upper structure (16), the upper structure (16) comprising a mast (18) that is cantilevered from an upper end of the spar buoy (14).

2. The method of Claim 1, wherein a longitudinal axis (22) of the assembly (10) is inclined at an acute angle to the horizontal.

3. The method of Claim 1 or Claim 2, wherein the aggregate upthrust acting on the spar buoy (14) and the at least one support buoy (32, 90) substantially equates to the entire weight of the assembly (10).

4. The method of any preceding claim, comprising supporting the brace (42, 74) on the or each support buoy (32, 90).

5. The method of any preceding claim, comprising applying supporting force to the upper structure (16) through the brace (42, 74) from beneath the upper structure (16).

6. The method of any preceding claim, wherein the assembly (10) has a centre of gravity disposed at a longitudinal position between the or each support buoy (32, 90) and the lower end of the assembly (10).

7. The method of any preceding claim, further comprising upending the assembly (10) from the transport configuration by ballasting the spar buoy (14) and rotating the assembly (10) about the or each support buoy (32, 90) as the longitudinal axis (22) approaches an upright orientation.

8. The method of Claim 7, comprising separating the upper structure (16) from the brace (42, 74) before or during rotation of the assembly (10).

9. The method of Claim 7 or Claim 8, comprising separating the brace (42, 74) from the or each support buoy (32, 90) before rotation of the assembly (10).

10. The method of any preceding claim, comprising cradling the spar buoy (14) with the support buoy (32, 90) or between two or more of the support buoys (32, 90).

11. A method of assembling a spar-type floating offshore wind turbine assembly (10), the method comprising:
attaching a discrete support buoy (32, 90) to a spar buoy (14) at a position offset longitudinally from a lower end of the spar buoy (14);
joining an upper structure (16) of the assembly (10) to the spar buoy (14) along a common longitudinal axis (22), the upper structure (16) comprising a mast (18) that is cantilevered from an end of the spar buoy (14); and
bracing the upper structure (16) of the assembly (10) with a brace (42, 74) that acts between the spar buoy (14) and the upper structure (16).

12. The method of Claim 11, comprising positioning the support buoy or buoys (32, 90) beneath and/or to opposed sides of the spar buoy (14).

13. The method of Claim 11 or Claim 12, comprising attaching the brace (42, 74) to the or each support buoy (32, 90).

14. The method of any of Claims 11 to 13, comprising preliminarily assembling the spar buoy (14) from two or more sections (54) that are moved onto, and united on, a launch axis (52) that is aligned with the longitudinal axis (22) of the assembly (10).

15. The method of Claim 14, further comprising launching the assembly (10) into water to be supported by buoyant upthrust arising from partial immersion of the spar buoy (14) and at least partial immersion of the at least one support buoy (32, 90).

16. The method of Claim 15, comprising supporting the assembly (10) on the at least one support buoy (32, 90) during launch movement of the assembly (10).

17. A spar-type offshore wind turbine assembly (10) floating on water in a transport configuration, the assembly comprising:
a partially immersed spar buoy (14) at a lower end of the assembly (10);
an upper structure (16) comprising a mast (18) that is cantilevered from an upper end of the spar buoy (14);
at least one discrete support buoy (32, 90) that is attached to the spar buoy (14) at a position offset longitudinally from the lower end, the or each support buoy (32, 90) being at least partially immersed; and
a brace (42, 74) that acts between the spar buoy (14) and the upper structure (16).

18. The assembly (10) of Claim 17, wherein the brace (42, 74) acts between the spar buoy (14) and the upper structure (16) via the or each support buoy (32, 90).

19. The assembly (10) of Claim 17, where the brace (42, 74) is supported on the or each support buoy (32, 90).

20. The assembly (10) of Claim 19, wherein the brace (42, 74) is cantilevered from the support buoy (32, 90).

21. The assembly (10) of any of Claims 17 to 20, wherein the brace (42, 74) comprises one or more members (78) under tension, the or each of those members (78) being anchored to the spar buoy (14) and/or to the upper structure (16).

22. The assembly (10) of any of Claims 17 to 21, wherein the brace (42, 74) suspends the upper structure (16) from above.

23. The assembly (10) of Claim 22, wherein the brace (42, 74) comprises at least one upright (76) that supports at least one tensile member (78) extending longitudinally and downwardly from the upright (76) to the spar buoy (14) and/or to the upper structure (16).

24. The assembly (10) of Claim 23, wherein tensile members (78) extend downwardly in opposite longitudinal directions from the upright (76) to the spar buoy (14) and the upper structure (16).

25. The assembly (10) of any of Claims 17 to 24, wherein the brace (42, 74) supports the upper structure (16) from beneath.

26. The assembly (10) of any of Claims 17 to 25, wherein the spar buoy (14) is cradled by or between the or each support buoy (32, 90).

27. The assembly (10) of any of Claims 17 to 26, wherein the or each support buoy (32, 90) is offset transversely to beneath the longitudinal axis (22).

28. The assembly (10) of any of Claims 17 to 27, wherein the or each support buoy (32, 90) is at a longitudinal position wholly within the length of the spar buoy (14).

## Patentansprüche

1. Verfahren zum Stützen einer schwimmenden Offshore-Spar-Bojen-Windkraftanlagenanordnung (10) in einer Transportkonfiguration, wobei das Verfahren Folgendes umfasst:
Aufbringen von Schwimmauftrieb auf die Anordnung (10) durch partielles Eintauchen einer Spar-Boje (14) an einem unteren Ende der Anordnung (10) und mindestens partiellem Eintauchen mindestens einer diskreten Stützboje (32, 90), die an einer in Längsrichtung von dem unteren Ende versetzten Stelle an der Spar-Boje (14) angebracht ist; und
Versteifen einer oberen Struktur (16) der Anordnung (10) mit einer Versteifung (42, 74), die zwischen der Spar-Boje (14) und der oberen Struktur (16) wirkt, wobei die obere Struktur (16) einen Mast (18) umfasst, der von einem oberen Ende der Spar-Boje (14) auskragt.

2. Verfahren nach Anspruch 1, wobei eine Längsachse (22) der Anordnung (10) unter einem spitzen Winkel zur Horizontalen schräggestellt ist.

3. Verfahren nach Anspruch 1 oder Anspruch 2, wobei der auf die Spar-Boje (14) und die mindestens eine Stützboje (32, 90) wirkende kumulierte Auftrieb im Wesentlichen dem gesamten Gewicht der Anordnung (10) entspricht.

4. Verfahren nach einem der vorangehenden Ansprüche, umfassend das Stützen der Versteifung (42, 74) auf der oder jeder Stützboje (32, 90).

5. Verfahren nach einem der vorangehenden Ansprüche, umfassend das Aufbringen von Stützkraft auf die obere Struktur (16) über die Versteifung (42, 74) von unterhalb der oberen Struktur (16).

6. Verfahren nach einem der vorangehenden Ansprüche, wobei die Anordnung (10) einen Schwerpunkt aufweist, der an einer Stelle in Längsrichtung zwischen der oder jeder Stützboje (32, 90) und dem unteren Ende der Anordnung (10) angeordnet ist.

7. Verfahren nach einem der vorangehenden Ansprüche, ferner umfassend das Umkehren der Anordnung (10) aus der Transportkonfiguration durch Beschweren der Spar-Boje (14) mit Ballast und Drehen der Anordnung (10) um die oder jede Stützboje (32, 90), wenn sich die Längsachse (22) einer senkrechten Ausrichtung nähert.

8. Verfahren nach Anspruch 7, umfassend das Trennen der oberen Struktur (16) von der Versteifung (42, 74) vor oder während des Drehens der Anordnung (10).

9. Verfahren nach Anspruch 7 oder Anspruch 8, umfassend das Trennen der Versteifung (42, 74) von der oder jeder Stützboje (32, 90) vor dem Drehen der Anordnung (10).

10. Verfahren nach einem der vorangehenden Ansprüche, umfassend das Tragen der Spar-Boje (14) mit der Stützboje (32, 90) oder zwischen zwei oder mehr der Stützbojen (32, 90).

11. Verfahren zum Zusammensetzen einer schwimmenden Offshore-Spar-Bojen-Windkraftanlagenanordnung (10), wobei das Verfahren Folgendes umfasst:
Anbringen einer diskreten Stützboje (32, 90) an einer Spar-Boje (14) an einer in Längsrichtung von einem unteren Ende der Spar-Boje (14) versetzten Stelle;
Verbinden einer oberen Struktur (16) der Anordnung (10) mit der Spar-Boje (14) entlang einer gemeinsamen Längsachse (22), wobei die obere Struktur (16) einen Mast (18) umfasst, der von einem Ende der Spar-Boje (14) auskragt; und
Versteifen der oberen Struktur (16) der Anordnung (10) mit einer Versteifung (42, 74), die zwischen der Spar-Boje (14) und der oberen Struktur (16) wirkt.

12. Verfahren nach Anspruch 11, umfassend das Positionieren der Stützboje oder - bojen (32, 90) unter der und/oder auf entgegengesetzten Seiten der Spar-Boje (14).

13. Verfahren nach einem der Anspruch 11 oder Anspruch 12, umfassend das Anbringen der Versteifung (42, 74) an der oder jeder Stützboje (32, 90).

14. Verfahren nach einem der Ansprüche 11 bis 13, umfassend das vorausgehende Zusammensetzen der Spar-Boje (14) aus zwei oder mehr Abschnitten (54), die auf eine Stapellaufachse (52) bewegt und darauf zusammengefügt werden, die mit der Längsachse (22) der Anordnung (10) fluchtet.

15. Verfahren nach Anspruch 14, ferner umfassend einen Stapellauf der Anordnung (10) in Wasser, um durch den aus partiellem Eintauchen der Spar-Boje (14) und mindestens partiellem Eintauchen der mindestens einen Stützboje (32, 90) entstehenden Schwimmauftrieb gestützt zu werden.

16. Verfahren nach Anspruch 15, umfassend das Stützen der Anordnung (10) auf der mindestens einen Stützboje (32, 90) während der Stapellaufbewegung der Anordnung (10).

17. Offshore-Spar-Bojen-Windkraftanlagenanordnung (10), die in einer Transportkonfiguration auf Wasser schwimmt, wobei die Anordnung Folgendes umfasst:
eine partiell eingetauchte Spar-Boje (14) an einem unteren Ende der Anordnung (10);
eine obere Struktur (16), die einen Mast (18) umfasst, der von einem oberen Ende der Spar-Boje (14) auskragt;
mindestens eine diskrete Stützboje (32, 90), die an einer Stelle, die in Längsrichtung von dem unteren Ende versetzt ist, an der Spar-Boje (14) angebracht ist, wobei die oder jede Stütz-Boje (32, 90) mindestens partiell eingetaucht ist; und
eine Versteifung (42, 74), die zwischen der Spar-Boje (14) und der oberen Struktur (16) wirkt.

18. Anordnung (10) nach Anspruch 17, wobei die Versteifung (42, 74) über die oder jede Stützboje (32, 90) zwischen der Spar-Boje (14) und der oberen Struktur (16) wirkt.

19. Anordnung (10) nach Anspruch 17, wobei die Versteifung (42, 74) auf der oder jeder Stützboje (32, 90) gestützt wird.

20. Anordnung (10) nach Anspruch 19, wobei die Versteifung (42, 74) von der Stützboje (32, 90) auskragt.

21. Anordnung (10) nach einem der Ansprüche 17 bis 20, wobei die Versteifung (42, 74) ein oder mehrere Glieder (78) unter Zug umfasst, wobei das oder jedes dieser Glieder (78) an der Spar-Boje (14) und/oder an der oberen Struktur (16) verankert ist.

22. Anordnung (10) nach einem der Ansprüche 17 bis 21, wobei die Versteifung (42, 74) die obere Struktur (16) von oben aufhängt.

23. Anordnung (10) nach Anspruch 22, wobei die Versteifung (42, 74) mindestens einen Pfosten (76) umfasst, der mindestens ein Zugglied (78) stützt, das sich in Längsrichtung und nach unten von dem Pfosten (76) zu der Spar-Boje (14) und/oder zu der oberen Struktur (16) erstreckt.

24. Anordnung (10) nach Anspruch 23, wobei sich Zugglieder (78) in entgegengesetzten Längsrichtungen nach unten von dem Pfosten (76) zu der Spar-Boje (14) und der oberen Struktur (16) erstrecken.

25. Anordnung (10) nach einem der Ansprüche 17 bis 24, wobei die Versteifung (42, 74) die obere Struktur (16) von unten stützt.

26. Anordnung (10) nach einem der Ansprüche 17 bis 25, wobei die Spar-Boje (14) von oder zwischen der oder jeder Stütz-Boje (32, 90) getragen wird.

27. Anordnung (10) nach einem der Ansprüche 17 bis 26, wobei die oder jede Stützboje (32, 90) in Querrichtung nach unterhalb der Längsachse (22) versetzt ist.

28. Anordnung (10) nach einem der Ansprüche 17 bis 27, wobei sich die oder jede Stützboje (32, 90) an einer Stelle in Längsrichtung befindet, die vollständig innerhalb der Länge der Spar-Boje (14) liegt.

## Revendications

1. Procédé de soutien d'un ensemble éolienne flottante en mer de type espar (10) dans une configuration de transport, le procédé comprenant :
appliquer une force ascendante de flottaison à l'ensemble (10) par immersion partielle d'une bouée espar (14) à une extrémité inférieure de l'ensemble (10) et immersion au moins partielle d'au moins une bouée de soutien (32, 90) distincte qui est attachée à la bouée espar (14) à un emplacement longitudinalement décalé de l'extrémité inférieure ; et
maintenir une structure supérieure (16) de l'ensemble (10) au moyen d'un dispositif de maintien (42, 74) qui agit entre la bouée espar (14) et la structure supérieure (16), la structure supérieure (16) comprenant un mât (18) qui s'étend en porte-à-faux à partir d'une extrémité supérieure de la bouée espar (14).

2. Procédé selon la revendication 1, dans lequel un axe longitudinal (22) de l'ensemble (10) est incliné à un angle aigu par rapport à l'horizontale.

3. Procédé selon la revendication 1 ou la revendication 2, dans lequel la force ascendante combinée agissant sur la bouée espar (14) et l'au moins une bouée de soutien (32, 90) est sensiblement égale au poids total de l'ensemble (10).

4. Procédé selon l'une quelconque des revendications précédentes, comprenant le fait de soutenir le dispositif de maintien (42, 74) sur la ou chaque bouée de soutien (32, 90).

5. Procédé selon l'une quelconque des revendications précédentes, comprenant le fait d'appliquer une force de soutien à la structure supérieure (16) par le biais du dispositif de maintien (42, 74) depuis le dessous de la structure supérieure (16).

6. Procédé selon l'une quelconque des revendications précédentes, dans lequel l'ensemble (10) présente un centre de gravité disposé à un emplacement longitudinal situé entre la ou chaque bouée de soutien (32, 90) et l'extrémité inférieure de l'ensemble (10).

7. Procédé selon l'une quelconque des revendications précédentes, comprenant, en outre, le fait de dresser l'ensemble (10) à partir de la configuration de transport en lestant la bouée espar (14) et en imprimant une rotation à l'ensemble (10) autour de la ou chaque bouée de soutien (32, 90) à mesure que l'axe longitudinal (22) s'approche d'une orientation verticale.

8. Procédé selon la revendication 7, comprenant le fait de séparer la structure supérieure (16) du dispositif de maintien (42, 74) avant ou durant la rotation de l'ensemble (10).

9. Procédé selon la revendication 7 ou la revendication 8, comprenant le fait de séparer le dispositif de maintien (42, 74) de la ou chaque bouée de soutien (32, 90) avant la rotation de l'ensemble (10).

10. Procédé selon l'une quelconque des revendications précédentes, comprenant le fait de placer la bouée espar (14) en appui sur la bouée de soutien (32, 90) ou entre deux des bouées de soutien (32, 90) ou plus.

11. Procédé d'assemblage d'un ensemble éolienne flottante en mer de type espar (10), le procédé comprenant :
attacher une bouée de soutien (32, 90) distincte à une bouée espar (14) à un emplacement longitudinalement décalé d'une extrémité inférieure de la bouée espar (14) ;
raccorder une structure supérieure (16) de l'ensemble (10) à la bouée espar (14) le long d'un axe longitudinal commun (22), la structure supérieure (16) comprenant un mât (18) qui s'étend en porte-à-faux à partir d'une extrémité de la bouée espar (14) ; et
maintenir la structure supérieure (16) de l'ensemble (10) au moyen d'un dispositif de maintien (42, 74) qui agit entre la bouée espar (14) et la structure supérieure (16).

12. Procédé selon la revendication 11, comprenant le fait de placer la ou les bouées de soutien (32, 90) sous et/ou sur des côtés opposés de la bouée espar (14).

13. Procédé selon la revendication 11 ou la revendication 12, comprenant le fait d'attacher le dispositif de maintien (42, 74) à la ou chaque bouée de soutien (32, 90).

14. Procédé selon l'une quelconque des revendications 11 à 13, comprenant le fait d'assembler préalablement la bouée espar (14) à partir de deux sections (54) ou plus qui sont amenées et jointes sur un axe de mise à l'eau (52) qui est aligné avec l'axe longitudinal (22) de l'ensemble (10).

15. Procédé selon la revendication 14, comprenant, en outre, le fait de mettre l'ensemble (10) à l'eau de façon à ce qu'il soit soutenu par une force ascendante de flottaison résultant d'une immersion partielle de la bouée espar (14) et d'une immersion au moins partielle de l'au moins une bouée de soutien (32, 90).

16. Procédé selon la revendication 15, comprenant le fait de soutenir l'ensemble (10) sur l'au moins une bouée de soutien (32, 90) durant le déplacement de mise à l'eau de l'ensemble (10).

17. Ensemble éolienne en mer de type espar (10) flottant sur l'eau dans une configuration de transport, l'ensemble comprenant :
une bouée espar (14) partiellement immergée à une extrémité inférieure de l'ensemble (10) ;
une structure supérieure (16) comprenant un mât (18) qui s'étend en porte-à-faux à partir d'une extrémité supérieure de la bouée espar (14) ;
au moins une bouée de soutien (32, 90) distincte qui est attachée à la bouée espar (14) à un emplacement longitudinalement décalé de l'extrémité inférieure, la ou chaque bouée de soutien (32, 90) étant au moins partiellement immergée ; et
un dispositif de maintien (42, 74) qui agit entre la bouée espar (14) et la structure supérieure (16).

18. Ensemble (10) selon la revendication 17, dans lequel le dispositif de maintien (42, 74) agit entre la bouée espar (14) et la structure supérieure (16) par le biais de la ou chaque bouée de soutien (32, 90).

19. Ensemble (10) selon la revendication 17, dans lequel le dispositif de maintien (42, 74) est soutenu sur la ou chaque bouée de soutien (32, 90).

20. Ensemble (10) selon la revendication 19, dans lequel le dispositif de maintien (42, 74) s'étend en porte-à-faux à partir de la bouée de soutien (32, 90).

21. Ensemble (10) selon l'une quelconque des revendications 17 à 20, dans lequel le dispositif de maintien (42, 74) comprend un ou plusieurs éléments (78) en tension, l'élément ou chacun de ces éléments (78) étant fixés à la bouée espar (14) et/ou à la structure supérieure (16).

22. Ensemble (10) selon l'une quelconque des revendications 17 à 21, dans lequel le dispositif de maintien (42, 74) suspend la structure supérieure (16) depuis le dessus.

23. Ensemble (10) selon la revendication 22, dans lequel le dispositif de maintien (42, 74) comprend au moins un montant (76) qui soutient au moins un élément de tension (78) s'étendant longitudinalement et vers le bas du montant (76) à la bouée espar (14) et/ou à la structure supérieure (16).

24. Ensemble (10) selon la revendication 23, dans lequel des éléments de tension (78) s'étendent vers le bas dans des sens longitudinaux opposés du montant (76) à la bouée espar (14) et à la structure supérieure (16).

25. Ensemble (10) selon l'une quelconque des revendications 17 à 24, dans lequel le dispositif de maintien (42, 74) soutient la structure supérieure (16) depuis le dessous.

26. Ensemble (10) selon l'une quelconque des revendications 17 à 25, dans lequel la bouée espar (14) est mise en appui sur ou entre la ou chaque bouée de soutien (32, 90).

27. Ensemble (10) selon l'une quelconque des revendications 17 à 26, dans lequel la ou chaque bouée de soutien (32, 90) est décalée transversalement sous l'axe longitudinal (22).

28. Ensemble (10) selon l'une quelconque des revendications 17 à 27, dans lequel la ou chaque bouée de soutien (32, 90) est située à un emplacement longitudinal se trouvant entièrement dans les limites de la longueur de la bouée espar (14).
